# EUROPÄISCHE PATENTSCHRIFT

(11) **EP 0 523 002 B1**
(45) Veröffentlichungstag und Bekanntmachung des Hinweises auf die Patenterteilung: **28.02.1996**
(21) Anmeldenummer: 92810486.8
(22) Anmeldetag: 25.06.1992
(51) Int. Cl.: H01F 7/02, F16C 39/06

(54) **Aus mehreren Einzelmagnetkörpern zusammengesetzter Magnetkörper und eine dauermagnetische Schwebelagerung mit aus mehreren Einzelmagneten zusammengesetztem Gesamtmagnetkörper**
Compound magnet comprising several individual magnets and a permanent magnetic bearing with a compound magnet comprising several individual magnets
Aimant composé comprenant plusieurs aimants individuels et palier magnétique permanent avec un aimant composé comprenant plusieurs aimants individuels

(30) Priorität: 11.07.1991 CH 2072/91
(43) Veröffentlichungstag der Anmeldung: 13.01.1993
(73) Patentinhaber: LAUBE, Hans-Jürgen, CH-8573 Siegershausen (CH)
(72) Erfinder: LAUBE, Hans-Jürgen, CH-8573 Siegershausen (CH)
(74) Vertreter: Gachnang, Hans Rudolf

(56) Entgegenhaltungen:
- EP-A- 0 034 254
- EP-A- 0 054 617
- EP-A- 0 178 025
- DE-A- 3 204 503
- GB-A- 935 215
- GB-A- 2 124 033
- US-A- 4 222 021
- PATENT ABSTRACTS OF JAPAN vol. 10, no. 126 (M-477)(2183) 10. Mai 1986 & JP-A-60 252 820 (Toshiba) 13. Dezember 1985
- PATENT ABSTRACTS OF JAPAN vol. 12, no. 393 (E-670)(3240) 19. Oktober 1988 & JP-A-63 133 602 (Seitetsu Kagaku) 6. Juni 1988)

## Beschreibung

Gegenstand der vorliegenden Erfindung ist ein aus mehreren Einzelmagnetkörpern zusammengesetzter Gesamtmagnetkörper gemäss Oberbegriff des Anspruches 1.

Gegenstand der vorliegenden Erfindung ist weiter eine Verwendung des Magnetkörpers als eine dauermagnetische Schwebelagerung mit einem aus mehreren Einzelmagneten zusammengesetzten Gesamtmagnetkörper.

Als Magnete kennt man jene aus Eisen, SoCo, Neodym etc. Sie weisen meist die Gestalt eines Stabes, einer Nadel oder eines Hufeisens auf. Bei diesen Magneten enthalten die beiden Enden der Magnetkörper jeweils den Nord- und den Südpol. Von diesen beiden Polen fliessen die magnetischen Feldlinien auch ausserhalb des Magnetkörpers von Pol zu Pol. Der bogenförmige Verlauf der Feld-/Magnetflusslinien ist bekannt und kann in einfacher Weise durch auf ein Papier gestreute Stahlspäne bildlich oder durch geeignete Messinstrumente aufgezeigt werden. Diese Erscheinung zeigt, dass mit einem herkömmlichen Magneten kein einpoliger Feldbereich dargestellt werden kann, d.h. der Nordpol wird stets durch den Südpol und umgekehrt erheblich beeinflusst. Die äusseren Magnetfeldlinien zeigen einen bogenförmigen Verlauf zum Gegenpol.

Aus der GB-A-935,215 sind pyramidenförmige Magnete bekannt, deren Höhe der Hälfte der Länge der Grundfläche entspricht. Die Spitzen der Pyramiden weisen den einen Pol und die Aussengrundfläche den anderen Pol auf. Gemäss der Lehre des englischen Patentes sollen sechs solcher gleicher Pyramiden einen Würfel ergeben, dessen Oberfläche nur die Polarität der Grundflächen der einzelnen Pyramiden aufweist. Im Zentrum soll sich dann der Gegenpol befinden. Aus der Erkenntnis, dass die Feld-oder Kraftlinien eines magnetisierten Magnetkörpers ausserhalb seiner Oberfläche vom Nord- zum Südpol verlaufen, ergibt sich - und exakte Messungen mit modernsten Messgeräten haben dies bestätigt - dass die Oberfläche eines gemäss der Lehre der GB-A-935,215 aufgebauten Würfels sich nicht einpolig darstellt, sondern dass der Würfel mit Nord- und Südpolbereichen erscheint, wenn es überhaupt gelingt, die Pyramiden zu einem Ganzen zusammenzufügen. Die erwünschte Einpoligkeit ist daher nach dieser bekannten Lehre nicht zu erreichen.

Ein prinzipiell gleich aufgebauter Magnetkörper ist aus der US-A-4,222,021 bekannt, mit dem Unterschied, dass im Zentrum des Magnetkörpers ein Hohlraum vorliegt, dessen innere Oberfläche entgegengesetzt zur Oberfläche des Magnetkörpers magnetisiert sein soll. Auch bei diesem Magnetkörper ergibt sich - wie Messungen gezeigt haben - nach dem Zusammenfügen der Einzelmagnetkörper zu einem Ganzen, ein Magnet mit einem Nord- und einem Südpol oder ein Magnet mit mehreren sich teils Süd und teils Nord darstellenden Oberflächenbereichen. Die Stärke solcherart zusammengesetzter Magnete ist zudem wesentlich geringer als diejenige der darin enthaltenen einzelnen frei dargestellen Magnete. Eine monopole Aussenoberfläche kann durch einen gemäss dem US-Patent ausgebildeten Magnetkörper nicht erreicht werden.

Es sind auch Magnete bekannt, bei denen einer der beiden Pole und das zwischen den beiden Polen liegende Material an der äusseren Oberfläche von einem Mantel umgeben wird, so dass das magnetische Feld des jeweils abgedeckten Poles abgeschirmt ist und damit der normale, bogenförmige Verlauf der Feldlinien von Pol zu Pol nur noch in einem geringen Umfang und fast ausschliesslich innerhalb der topfförmigen Abschirmung stattfindet. Es findet also ein Kurzfluss der Feldlinien innerhalb der Abschirmung statt. Solche Magnete finden in elektronischen Geräten, z.B. in Monitoren Verwendung. Die Abschirmung soll deren Störeinfluss auf umliegende elektronische Elemente verhindern.

Es sind Lageranordnungen mittels Dauermagneten bekannt. In der DE-C2-2951010 wird ein dauermagnetisches Radiallager, für Ultragaszentrifugen beschrieben, das aus zwei koaxial ineinander angeordneten durch in der Vorzugslage der Magnetisierung gleichsinnige axiale Magnetisierung einander in radialer Richtung abstossender Dauermagnetringen besteht. Solche Radiallager eignen sich für mit hoher Drehzahl umlaufende Zentrifugen mit geringer durch das Lager zu tragender Masse. Eine Uebertragung der bekannten Lagertechnik auf grössere Maschinen ist durch die im Moment begrenzten Möglichkeiten bei der Herstellung von hohlzylinderförmigen Magneten begrenzt.

Aus der US-A-4,186,567 ist weiter ein Magnetlager mit mindestens einem feststehenden und mindestens mit einem mit der Welle verbunden Magnetring bekannt, bei dem die radiale Lagerung der Welle durch ringförmig ausgebildete, einerseits auf der Welle und andererseits am drehenden Teil angeordneter Magnete besteht, deren Magnetisierungsrichtung axial verläuft und die mit abwechselnder Magnetisierungsrichtung übereinander geschichtet angeordnet sind. Für die axiale Stabilisierung der Welle sind ein Dauermagnet und ein diamagnetischer Körper in axialer Richtung nebeneinander angeordnet. Für die axiale Stabilisierung ist demzufolge nebst dem Magneten ein diamagnetischer Körper notwendig, der aus einem supraleitenden Material gefertigt ist, z.B. einer supraleitenden Spule mit einer Stromdichte von etwa 10⁵ Ampère pro cm.

Die japanische Schrift 60-252820 offenbart ein hohlzylindrisches Magnetlager. Der äussere Ring weist aussen Südpol und innen Nordpol auf; beim inneren Ring sind die Polaritäten umgekehrt. Die beiden Ringe sind aus im wesentlichen doppel-T-förmigen Magneten zusammengesetzt, bei denen die Balken des Doppel-T jeweils den Nord- und Südpol darstellen. Nichtmagnetische Elemente dienen dazu, die einzelnen doppel-T-förmigen Magnete unverrückbar miteinander zu einem Ring zu verbinden. Die Stirnflächen der Balken der benachbarten Magnete stossen aneinander und sollen dadurch durchgehende gleichpolige Magnetflächen bilden. Dies ist, wie entsprechende Messungen ergeben haben, jedoch nicht der Fall.

Die Aufgabe der Erfindung besteht darin, aus Einzelmagneten einen Magnetkörper zu schaffen, über einer dessen Oberfläche in einem Abstand ein sich monopolar darstellender Bereich vorliegt.

Eine weitere Aufgabe der Erfindung ist die Schaffung einer Schwebelageranordnung, bei der die das lager in Schwebe haltenden Kräfte durch Dauermagnete mit im wesentlichen monopolarer Oberfläche erzeugt wird, unter Verwendung des erfindungsgemässen Magnetkörpers.

Gelöst wird die erste Aufgabe durch eine Magnetkörper mit den Merkmalen des Anspruches 1. Die zweite Aufgabe wird gelöst durch eine Schwebelageranordnung gemäss den Merkmalen des Anspruches 7.

Der sich einpolig darstellende Bereich über einer der Oberfläche eines erfindungsgemäss aufgebauten Gesamtkörpers bewirkt, dass dieser ruhend verharrt, wenn ihm eine gleichpolige Magnetkörperformoberfläche gegenübersteht. Wenn beispielsweise dieser aus einer Mehrzahl von Einzelmagnetkörpern so zusammengesetzte Magnetkörper als Zylinder ausgebildet ist, wird er in einem Hohlzylinder mit gleichpoliger Innenoberfläche, dessen Innendurchmesser grösser ist als der Aussendurchmesser des Zylinders, berührungsfrei schwebend gehalten.

Längs der Welle abwechslungsweise mit der Welle und mit dem Stator verbundenen Paare von axial magnetisierten Ringmagneten, deren nicht an der Oberfläche liegende Flächen erfindungsgemäss umhüllt oder gekapselt sind, bewirken eine axiale Stabilisierung des Stators und des Rotors der Vorrichtung. Die Anordnung der Einzelmagnete innerhalb der Welle und zudem umgeben von einer Hülse, die magnetisch "Luft" ist, ergibt sich eine im wesentlich monopolare Oberfläche des Mantels der Welle, gemessen in einem Abstand zur Oberfläche.

Die ringförmigen radialmagnetisierten scheibenförmigen und übereinandergeschichteten Magnete einerseits auf dem Stator und andererseits in der Welle ergeben eine hohe radiale Stabiliserung des Rotorteiles (Welle) bezüglich des Statorteiles (Gehäuse). Durch die gruppenweise Anordnung der radial wirkenden Magnete erfolgt die axiale Abstützung über einen axial langen Bereich, bzw. durch entsprechende Erhöhung der Anzahl der Magnete kann die axiale Abstützung den Anforderungen angepasst werden.

Anhand illustrierter Ausführungsbeispiele wird die Erfindung näher erläutert. Es zeigen:
- Figur 1: einen Querschnitt durch einen Einzelmagnetkörper,
- Figur 2: eine perspektivische Darstellung des Einzelmagnetkörpers in Figur 1,
- Figur 3: einen kreissegmentförmigen Einzelmagnetkörper,
- Figur 4: eine perspektivische Darstellung einer aus kreissegmentförmigen Elementen zusammengestellten zylindrischen Welle,
- Figur 5: einen aus Segmenten zusammengesetzten Hohlzylinder,
- Figur 6: die Welle aus Figur 4, eingesetzt in den Hohlzylinder gemäss Figur 5,
- Figur 7: einen Stabmagneten mit dem Verlauf der Feldlinien,
- Figur 8: den Verlauf der Feldstärken längs Linie 1 bis 6 in Figur 7,
- Figur 9: den Verlauf der Feldstärken längs Linie 7 bis 10 in Figur 7
- Figur 10: einen Schnitt durch nebeneinander angeordnete gekapselte Magnete und deren Feldstärken.
- Figur 11: eine Welle mit darin angeordneten radial wirkenden Magneten,

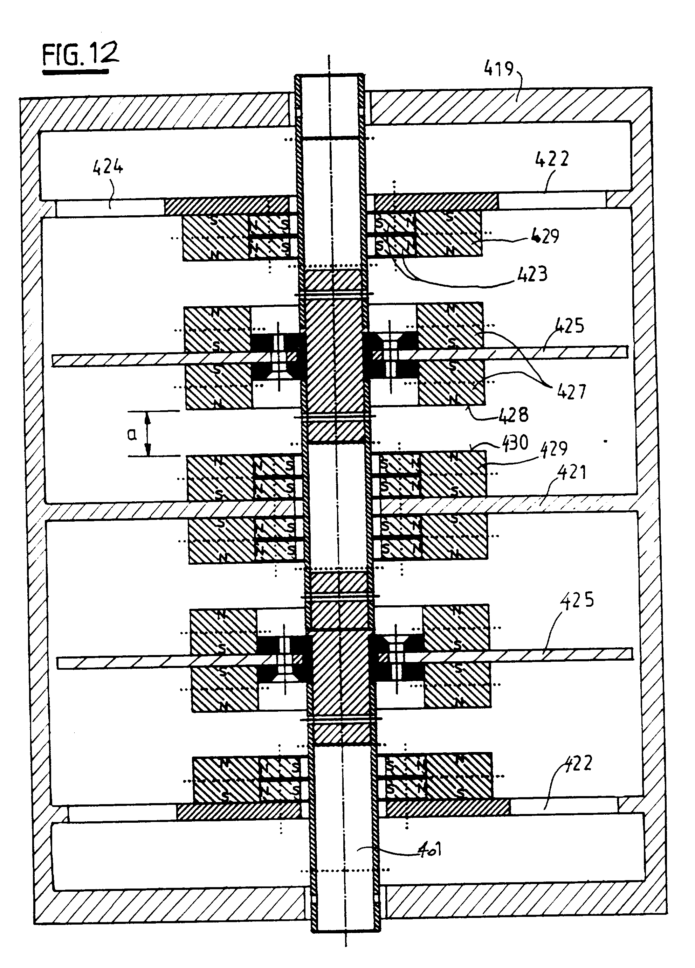

- Figur 12: die Welle in einem Gehäuse mit radial wirkenden Magneten sowie axial wirkenden Magneten auf der Welle und auf dem Gehäuse.

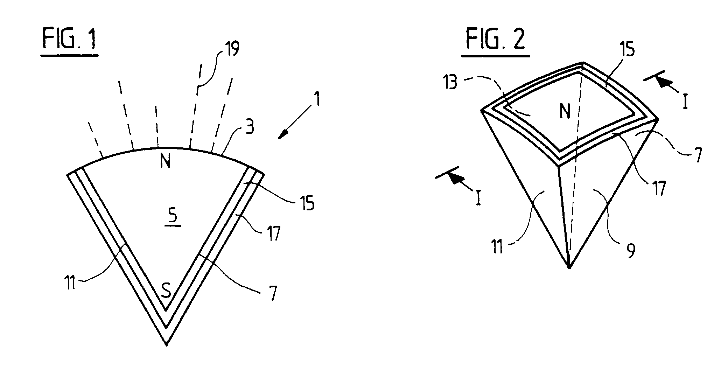

In Figur 1 ist der Querschnitt eines pyramidenförmigen Einzelmagnetkörpers 1 gezeigt, dessen Basisoberfläche 3 sich als Kugelausschnitt darstellt. Der innere Teil 5 des Einzelmagnetkörpers 1 besteht aus einem magnetisiertem Material, vorzugsweise ein permanentmagnetisiertes SoCo, Neodym, einem Seltenerdenmetall etc. Der teilweise gekapselte Magnet ist so polarisiert, dass an der kugelausschnittförmigen Basisoberfläche 3 z.B. der Nordpol und an der Pyramidenspitze der Südpol liegt. Die vier Seitenflächen 7, 9, 11 und 13 in Figur 1 sind mit einem magnetisch nicht existierenden Material, z.B. Kupfer, V2A-, V4A-Stahl, Kunststoff, Holz als erste Schicht abgedeckt. Über der als "magnetisch nicht existenten" ersten Schicht 15 liegt eine zweite Schicht 17 aus einem Trenn- und Abschirm-Metall, z.B. einem MU-Metall Vacoperm 100 etc. der Firma Vacuumschmelze GmbH, D-W-6450 Hanau 1, welches die Eigenschaft hat, die vom Magneten 5 ausgehenden Kraft- bzw. Feldlinien 19 abzuschirmen, d.h. ihren Austritt aus dem Magnetkörper 1 zu verhindern und folglich den Verlauf der Magnetfeldlinien durch dieses Material zu lenken.

Aus der perspektivischen Darstellung des Einzelmagnetkörpers 1 in Figur 2 ist ersichtlich, dass durch die Abschirmung der Feldlinien des Südpoles innerhalb der ersten Schicht 15 geführt werden und sich einzig das Nordpol-Feld an der Oberfläche darstellt, wobei die Feldlinien 19 rechtwinklig aus der Oberfläche heraustreten.

Solche "eingepackten" Magnete sind, wie bereits in der Einleitung allgemein erwähnt, unter dem Namen Topfmagnete bekannt. Ihr Anwendungsbereich liegt in der Fernseh- und Radiotechnik, dem Waagenbau und in Bereichen, wo eine Abschirmung des magnetischen Feldes zwecks Vermeidung von Störungen benachbarter elektronischer Elemente notwendig ist.

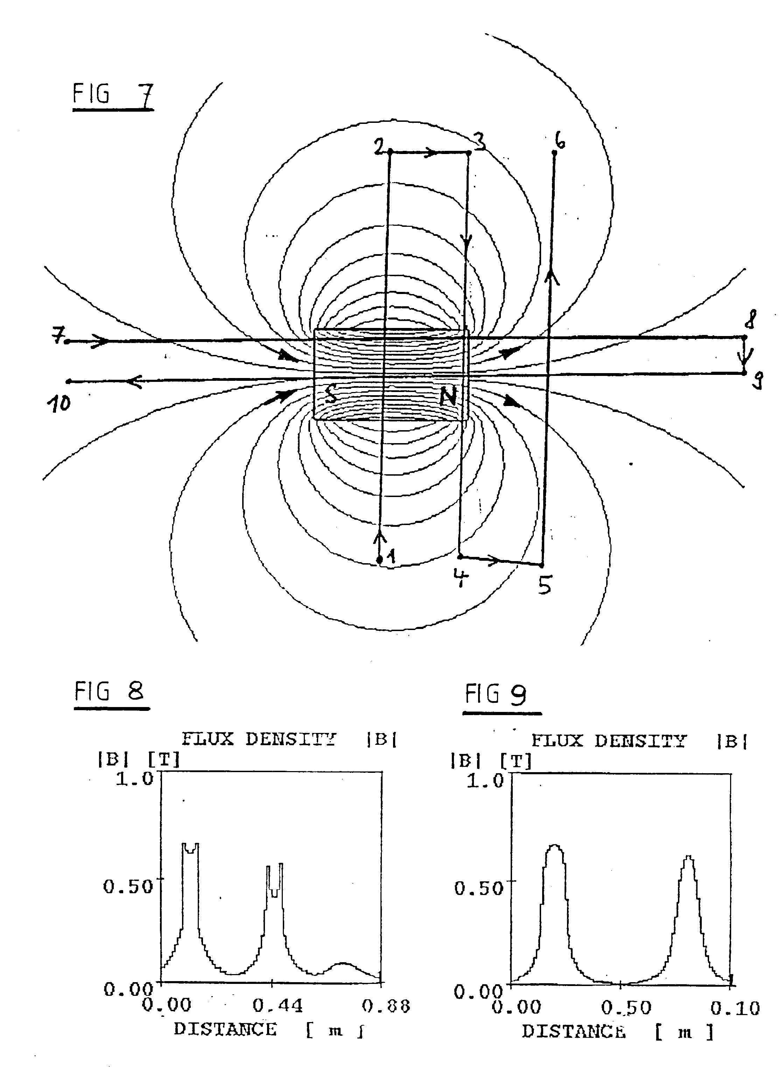

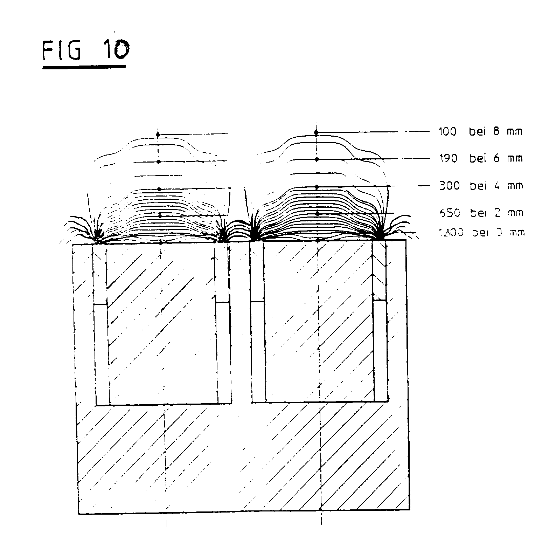

In den Figuren 7 bis 9 werden zur Erläuterung des Magnetfeldlinienverlaufes und der Felddichte ein ungekapselter Stabmagnet und in Figur 10 zwei gekapselte Stabmagnete gezeigt. Aus der Figur 7 ist ersichtlich, dass die Feldlinien die Nordpolfläche verlassen und bogenförmig zum Südpol fliessen und in diese Fläche eintreten. Exakte Messungen, welche an der ETH in Zürich durchgeführt worden sind, haben die Werte, wie sie in den Figuren 8 und 9 graphisch dargestellt sind, ergeben. Figur 8 stellt den Weg längs der dicken Linie zwischen den Punkten 1 bis 6 und Figur 9 den Weg zwischen den Punkten 7 bis 10 dar. Die höchste Dichte zwischen den Punkten 1 und 2 wird direkt über der Oberfläche des Magneten erreicht (vergleiche die Spitzen der Kurve in Figur 8). Auf dem Weg von Punkt 7 bis Punkt 8 wird die höchste Feldliniendichte ebenfalls über der Oberfläche des Magneten festgestellt.

Vergleicht man nun die Feldstärken in verschiedenen Abständen zur freien Poloberfläche an zwei gekapselten Magneten, wie sie in Figur 10 dargestellt und aus einer exakten Messung mit modernsten Messgeräten hervorgegangen sind, so stellt man fest, dass über den freiliegenden Polenden oberhalb von 3 mm nur "NORD" vorliegt. An den Kontaktstellen zwischen den gekapselten Magneten treten unterhalb von circa 3 mm noch die kurzschliessenden Feldlinien mit Südpolarität aus der Oberfläche. Über diesem Übergangsbereich liegt ein monopolarer Bereich.

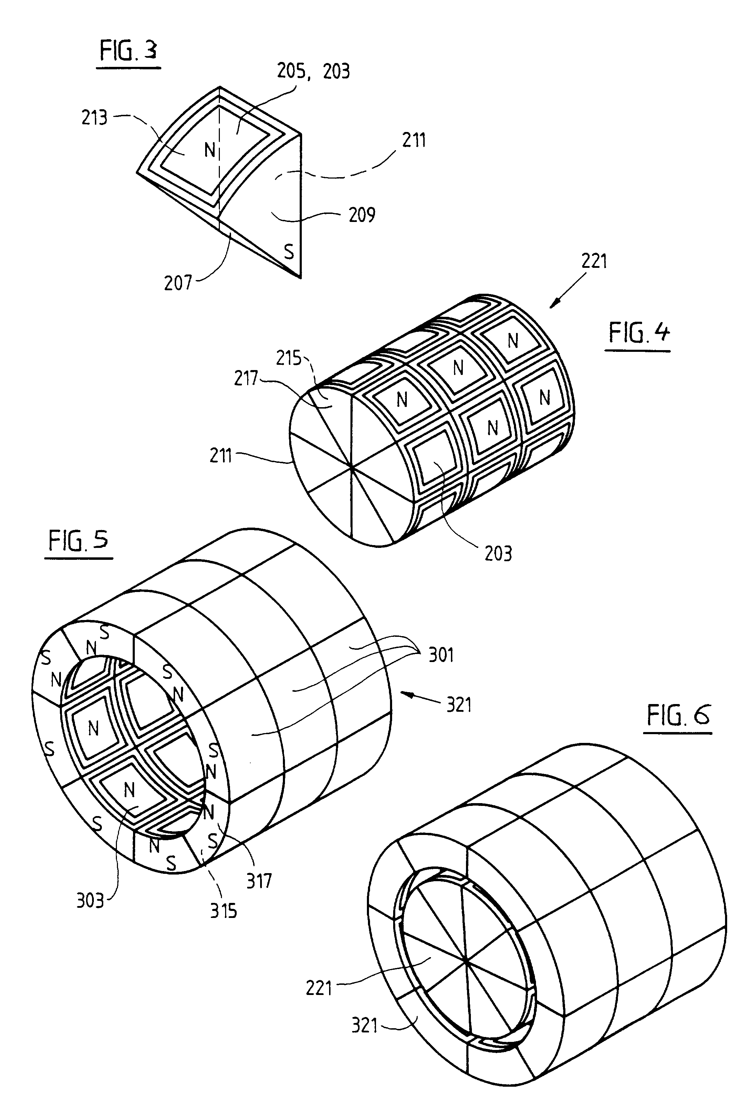

In der Ausgestaltung der Erfindung gemäss den Figuren 3 und 4 sind die Einzelmagnetkörper 201 als Kreisscheibenausschnitte ausgebildet, wobei deren Basisoberfläche 203, an der der Magnet 205 unbedeckt an der Oberfläche liegt, die Gestalt eines Zylindermantelausschnittes aufweist. Werden beispielsweise acht solcher Kreisscheibenabschnitte zu einer Scheibe zusammengefügt und mehrere solcher Scheiben axial nebeneinander angeordnet, so entsteht ein zvlinderförmiger Gesamtkörper 221. dessen Mantelfläche die Polarität Nord aufweist.

Analog zu der Ausführung gemäss den Figuren 3 und 4, sind die Einzelmagnetkörper 301 im Beispiel gemäss den Figuren 5 und 6 aufgebaut und angeordnet, mit dem Unterschied, dass anstelle von Kreisscheibensegmenten solche von Kreisringscheibensegmenten 301 treten und damit bei deren Zusammenfügen ein Hohlzylinder als Gesamtkörper 321 gebildet wird. Bei diesem Hauptkörper 321 sind im Gegensatz zu den bisher beschriebenen die Polaritäten vertauscht, d.h. es soll nach diesem Beispiel aussen der Südpol und innen, d.h. auf der die innere Hohlzylinderoberfläche 323 bildende Seite der Nordpol liegen. Der aussen am Mantel liegende Südpol kann, wie bereits in den anderen Beispielen, durch Schichten 315 und 317 abgeschirmt sein.

Wird nun in einen solchen Hohlzylinder 321 ein Zylinder 221 gemäss Figur 4 eingeführt, dessen Durchmesser kleiner ist als die Bohrung 323 (vgl. Figur 9), so wird der Zylinder 221 vom Hohlzylinder 321 radial abgestossen, d.h. er verharrt berührungslos innerhalb der Bohrung, sofern die magnetischen Kräfte das Gewicht des Zylinders 221 zu tragen vermögen. Die axiale Lagerung des innenliegenden Magnetkörpers kann ebenfalls auf magnetische Weise erfolgen.

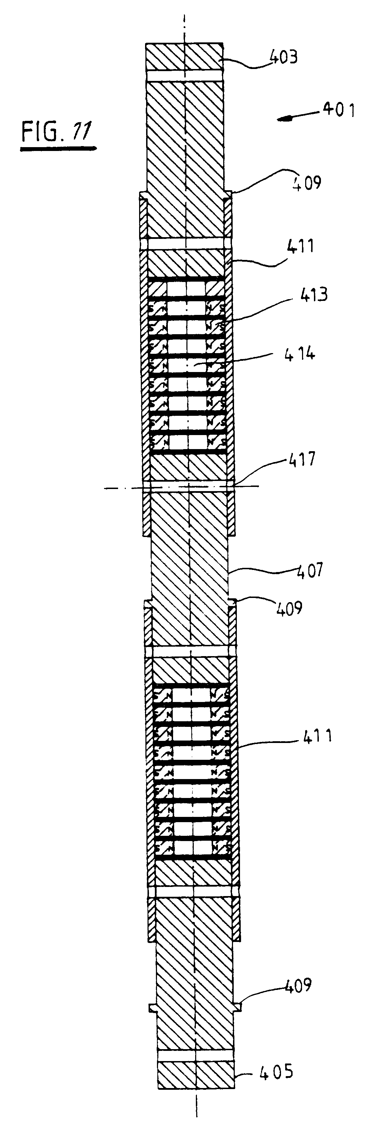

Die zu einem zylinderförmigen Hauptkörper 221 zusammengefassten Einzelmagnetkörper 201 und die zu einem Hohlzylinder 301 zusammengefassten kreisringscheibenabschnittförmigen Einzelmagnetkörper 301 können durch einen die Magnetkörper aussen zusammenhaltenden, aus Kupfer oder dergleichen nicht magnetisch existentem Material bestehenden Mantel zusammengehalten werden. Anstelle eines die Magnetkörper zusammenhaltenden Mantels können selbstverständlich die Magnetkörper auf andere Weise miteinander an den Seitenflächen verbunden werden. Die in Figur 11 dargestellte Welle (Rotor) 401 ist aus mehreren Abschnitten zusammengesetzt. Er kann beispielsweise dem Aufbau der Welle 221 in Figur 7 entsprechen. Die beiden Enden 403 und 405 sowie der zentrale Abschnitt 407 - es können auch mehrere zentrale Abschnitte 407 vorgesehen werden - tragen je eine umlaufende Schulter 409, an welcher eine Hülse 411 axial anliegt. Die Hülse 411 umschliesst eine Mehrzahl von axial übereinander angeordneten radialmagnetisierten Ringmagnete 413, deren Nordpol N der sich ergebenden koaxial verlaufenden Bohrung 414 zugewendet sind. Die Südpole liegen auf der Peripherie des Ringmagnetpaketes und sind von der Hülse 411 abgedeckt. Letztere besteht aus einem nichtmagnetisierbaren Material, wie Chromstahl, Kupfer, etc. Die Hülsen 411 und die Enden 403 und 405, bzw. der Abschnitt 407 sind durch Splinten 417 oder dgl. unlösbar miteinander verbunden. Der Aussenring bzw. das Gehäuse 419 der Lageranordnung trägt koaxial angeordnete kreisringförmige Scheiben 421,422. Im zentralen Bereich der Scheiben 421 sind beidseitig kreisringförmige, radialmagnetisierte Magnete 423 axial übereinander geschichtet und mit den Scheiben 421 verbunden. Auf den axial an den Enden 403,405 liegenden Scheiben 422 sind jeweils nur auf der Innenseite Magnete 423 angebracht, auf den innen liegenden Scheiben 421 sind beidseitig Magnete 423 aufgesetzt und mit der Scheibe 421 fest verbunden. Der Innendurchmesser der Magnete 423 ist geringfügig grösser als der Aussendurchmesser der Hülsen 411. unter denen die Ringmagnete 413 in der Welle 401 angeordnet sind. Die Magnete 413 auf der Welle 1 und die Magnete 423 auf den Scheiben 421 bilden die radiale Lagerung der Welle 401 im Gehäuse 419. Selbstverständlich könnte auch die Welle 401 als Stator feststehend ausgebildet sein und das Gehäuse 419 um die Welle 401 drehen. Zur Verringerung der Masse können in den Scheiben 421,422 Bohrungen 424 angebracht sein. Der Aufbau der Magnete 423 kann demjenigen in Figur 8 entsprechen.

Zur axialen Lagerung der Welle 401 im Gehäuse 409 sind an der Welle 401 im Bereich der Enden 403 und dem zentralen Abschnitt 407 im Anschluss an die Stirnseiten der Hülsen 411 rinfgörmige Scheiben 425 drehfest angeordnet. Die Scheiben 425 tragen kreisringförmige Magnete 427, welche axial magnetisiert sind. Auf der oder den zentralen Scheiben 425 sind beidseitig Magnete 427 befestigt, wobei deren Magnetisierung entgegengesetzt ausgebildet ist, d.h. es liegen im Kontaktbereich an der Scheibe 425 die Südpole einander gegenüber.

Gleich ausgebildete ringförmige Magnete 429 umgeben radial die Magnete 423 auf den Scheiben 421,422 und sind mit letzteren fest verbunden. Auch die Magnete 429 sind axial magnetisiert und liegen jeweils mit ihren Südpolen auf den Scheiben 421 auf. Die Nordpole der Magnete 429 sowie der Magnete 427 liegen sich in einem Abstand a gegenüber. Durch die axial übereinander angeordneten Magnete 427 und 429 wird die Welle 401 im Gehäuse 419 axial in Schwebe gehalten.

Zur Erhöhung der axialen Tragfähigkeit der Lageranordnung können auf den Scheiben 421,422 und 425 radial ausser den Magneten 427 und 429 weitere Magnete angeordnet werden.

## Patentansprüche

1. Aus mehreren Einzelmagnetkörpern (1,101,201,301) zusammengesetzter Haupt- oder Magnetkörper (21,121,221,321), dessen Oberfläche aus den die Polflächen umfassenden Oberflächen (3,13,103) der Einzelmagnetkörper (1,101,201,301) gebildet ist dadurch gekennzeichnet, dass die unter der Oberfläche des zusammengesetzten Magnetkörpers (21,121,221,321) liegenden Seitenflächen (7,9,11,13;107,109,111,113;207,209,211,213) der Einzelmagnetkörper (1,101,201,301) mit einer magnetisch leitenden Materialschicht (17) abgedeckt sind.

2. Magnetkörper nach Anspruch 1, dadurch gekennzeichnet, dass zwischen den magnetischen leitenden Materialschichten (17) und den Einzelmagnetkörpern jeweils eine Schicht (15) aus einem magnetisch nicht leitendem Material eingelegt ist.

3. Magnetkörper gemäss einem der Ansprüche 1 oder 2, dadurch gekennzeichnet, dass dieser aus einer Mehrzahl von pyramidenförmigen Einzelmagnetkörpern (3) zu einem kugelförmigen Hauptkörper (121) zusammengefügt ist.

4. Magnetkörper gemäss einem der Ansprüche 1 oder 2, dadurch gekennzeichnet, dass dieser aus einer Mehrzahl von kreisscheibenabschnittförmigen Einzelmagnetkörpern (201) zu einem zylinderförmigen Hauptkörper (221) zusammengefügt ist.

5. Magnetkörper nach einem der Ansprüche 1 oder 2, dadurch gekennzeichnet, dass dieser aus einer Mehrzahl von kreisringscheibenförmigen Einzelmagnetkörpern (301) zu einem hohlzylinderförmigen Hauptkörper (321) zusammengefügt ist.

6. Magnetkörper nach einem der Ansprüche 1 bis 5, dadurch gekennzeichnet, dass durch Zusammenfügen geeignet geformter Einzelmagnetkörper (1,101,201,301) ein Hauptkörper (21,121,221,321) beliebiger Form erzeugbar ist, bei dem in einem Abstand zu dessen Oberfläche, welche durch die Polflächen der Einzelmagnetkörper (1,101,201,301) gebildet ist, eine einzige Polarität vorliegt.

7. Verwendung des Magnetkörpers gemäss Anspruch 1 in einer dauermagnetischen Schwebelageranordnung, umfassend einen Stator (419) mit mindestens einem ersten ringförmigen Magneten (423) und eine Welle (401) mit mindestens einem zweiten ringförmigen Magneten (413), wobei der mindestens eine zweite ringförmige Magnet (413) aus mehreren Einzelmagneten zusammengesetzt ist, dadurch gekennzeichnet, dass die den zweiten ringförmigen Magneten (413) bildenden Einzelmagnete an deren nicht an den zylindrischen Mantelfläche liegenden Seitenflächen von einer Schicht (17) aus einem magnetisch leitenden Material umschlossen sind.

8. Verwendung nach Anspruch 7 dadurch gekennzeichnet, dass über der magnetisch leitenden Schicht (17) eine magnetisch nicht leitende Schicht (15) angeordnet ist.

9. Verwendung nach einem der Ansprüche 7 oder 8, dadurch gekennzeichnet, dass die im Zentrum des Stators (419) angeordneten ringförmigen Magnete (423) den auf der Welle (401) sitzenden Magneten (413) radial gegenüberliegend angeordnet sind.

10. Verwendung nach Anspruch 9, dadurch gekennzeichnet, dass die im Stator (419) ringförmig angeordneten Magnete (423) auf deren nicht an der Oberfläche liegenden Flächen von einer Schicht (17) aus einem magnetisch leitenden Material umschlossen sind.

11. Verwendung nach einem der Ansprüche 7 bis 10, dadurch gekennzeichnet, dass zur axialen Lagerung der Welle (401) im Stator (419) axial polarisierte erste Magnete (427) beidseitig auf ringförmigen, an der Welle (401) befestigten Scheiben (425) und axial polarisierte zweite Magnete (429) auf ringförmigen, am Stator (419) befestigten Scheiben (421,422) angeordnet sind.

12. Verwendung nach einem der Ansprüche 8 und 9, dadurch gekennzeichnet, dass die axial polarisierten ersten und zweiten Magnete (427, 429) an deren nicht an der Oberfläche liegenden Seitenflächen von einer Schicht (17) aus einem magnetisch leitendem Material umschlossen sind.

## Claims

1. Main or magnetic member (21, 121, 221, 321) combined from a plurality of individual magnets (1, 101, 201, 301), the surface of said main or magnetic member being formed from the surfaces (3, 13, 103) comprising the pole surfaces of the individual magnets (1, 101, 201, 301), characterised in that the lateral faces (7, 9, 11, 13; 107, 109, 111, 113; 207, 209, 211, 213) of the individual magnets (1, 101, 201, 301) lying beneath the surface of the combined magnet member (21, 121, 221, 321) are covered by a layer of magnetically conductive material (17).

2. Magnetic member according to claim 1, characterised in that there is respectively interposed between the layers of magnetically conductive material (17) and the individual magnets a layer (15) of a magnetically non-conductive material.

3. Magnetic member according to one of claims 1 or 2, characterised in that said magnetic member is combined from a plurality of pyramidal individual magnets (3) to form a spherical main member (121).

4. Magnetic member according to one of claims 1 or 2, characterised in that said magnetic member is combined from a plurality of segment-shaped individual magnets (201) to form a cylindrical main member (221).

5. Magnetic member according to one of claims 1 or 2, characterised in that said magnetic member is combined from a plurality of annular segment-shaped individual magnets (301) to form a hollow cylindrical main member (321).

6. Magnetic member according to one of claims 1 to 5, characterised in that, by means of combining suitably-shaped individual magnets (1, 101, 201, 301), a main member (21, 121, 221, 321) of optional shape may be produced, in which at a distance from its surface formed by the pole faces of the individual magnets (1, 101, 201, 301), one single polarity is present.

7. Use of a magnetic member according to claim 1 in a perma-magnet frictionless bearing arrangement comprising a stator (419) with at least one annular first magnet (423) and a shaft (401) with at least one second annular magnet (413), the at least one second annular magnet (413) being composed of a plurality of individual magnets, characterised in that the individual magnets forming the second annular magnet (413) are surrounded, on their lateral faces not abutting on the cylindrical outer surface, by a layer (17) of a magnetically conductive material.

8. Use according to claim 7, characterised in that there is disposed over the magnetically conductive layer (17) a magnetically non-conductive layer (15).

9. Use according to one of claims 7 or 8, characterised in that the annular magnets (423) disposed in the centre of the stator (419) are disposed to lie radially opposite the magnet (413) sitting on the shaft (401).

10. Use according to claim 9, characterised in that the magnets (423) disposed annularly in the stator (419) are surrounded, on their faces not lying on the surface, by a layer (17) of a magnetically conductive material.

11. Use according to one of claims 7 to 10, characterised in that, in order to provide axial bearing for the shaft (40), there are respectively disposed in the stator (419) axially-polarised first magnets (427) on either side on annular discs (425) attached to the shaft (401), and axially-polarised second magnets (429) on annular discs (421, 422) attached to the stator (419) .

12. Use according to one of claims 8 and 9, characterised in that the axially-polarised first and second magnets (427, 429) are surrounded, on their lateral faces not lying on the surface, by a layer (17) of a magnetically conductive material.

## Revendications

1. Corps principal ou magnétique (21, 121, 221, 321) composé de plusieurs corps magnétiques individuels (1, 101, 201, 301), sa surface étant constituée par les surfaces (3, 13, 103) des corps magnétiques individuels (1, 101, 201, 301) qui entourent les surfaces polaires, caractérisé par le fait que les surfaces latérales (7, 9, 11, 13 ; 107, 109, 111, 113 ; 207, 209, 211, 213) des corps magnétiques individuels (1, 101, 201, 301) qui sont situées au-dessous de la surface du corps magnétique composé (21, 121, 221, 321) sont recouvertes par une couche (17) de matière magnétiquement conductrice.

2. Corps magnétique selon la revendication 1, caractérisé par le fait qu'une couche (15) de matière magnétiquement non conductrice est à chaque fois insérée entre les couches (17) de matière magnétiquement conductrice et les corps magnétiques individuels.

3. Corps magnétique selon l'une des revendications 1 et 2, caractérisé par le fait qu'il est composé d'une pluralité de corps magnétiques individuels (3) en forme de pyramides pour donner un corps principal sphérique (121).

4. Corps magnétique selon l'une des revendications 1 et 2, caractérisé par le fait qu'il est composé d'une pluralité de corps magnétiques individuels (201) en forme de secteurs de disques circulaires pour donner un corps principal cylindrique (221).

5. Corps magnétique selon l'une des revendications 1 et 2, caractérisé par le fait qu'il est composé d'une pluralité de corps magnétiques individuels (301) en forme de secteurs d'anneaux circulaires pour donner un corps principal (321) en forme de cylindre creux.

6. Corps magnétique selon l'une des revendications 1 à 5, caractérisé par le fait que l'assemblage de corps magnétiques individuels (1, 101, 201, 301) de formes appropriées permet de produire un corps principal (21, 121, 221, 321) de forme quelconque dans lequel une polarité unique est présente à distance de sa surface qui est formée par les surfaces polaires des corps magnétiques individuels (1, 101, 201, 301).

7. Utilisation du corps magnétique selon la revendication dans un palier flottant, comprenant un stator (419) qui comporte au moins un premier aimant annulaire (423) et un arbre (401) qui comporte au moins un deuxième aimant annulaire (413), le ou les deuxièmes aimants annulaires (413) étant composés de plusieurs aimants individuels, caractérisée par le fait que les aimants individuels qui constituent le deuxième aimant annulaire (413) sont entourés par une couche (17) de matière magnétiquement conductrice sur leurs surfaces latérales qui ne sont pas situées sur les surfaces latérales cylindriques.

8. Utilisation selon la revendication 7, caractérisée par le fait qu'une couche magnétiquement non conductrice (15) est disposée sur la couche magnétiquement conductrice (17).

9. Utilisation selon l'une des revendications 7 et 8, caractérisée par le fait que les aimants annulaires (423) qui sont disposés au centre du stator (419) sont situés dans le sens radial en face des aimants (413) qui sont montés sur l'arbre (401).

10. Utilisation selon la revendication 9, caractérisée par le fait que les aimants (423) qui sont disposés en forme d'anneau dans le stator (419) sont entourés par une couche (17) de matière magnétiquement conductrice sur leurs surfaces qui ne sont pas situées à la surface extérieure.

11. Utilisation selon l'une des revendications 7 à 10, caractérisée par le fait qu'en vue du montage sur palier axial de l'arbre (401) dans le stator (419), des premiers aimants polarisés axialement (427) sont disposés des deux côtés sur des disques annulaires (425) qui sont fixés à l'arbre (401) et des deuxièmes aimants polarisés axialement (429) sont disposés sur des disques annulaires (421, 422) qui sont fixés au stator (419).

12. Utilisation selon l'une des revendications 8 et 9, caractérisée par le fait que les premiers et les deuxièmes aimants polarisés axialement (427, 429) sont entourés par une couche (17) de matière magnétiquement conductrice sur leurs surfaces latérales qui ne sont pas situées à la surface extérieure.
